# EUROPÄISCHE PATENTSCHRIFT

(11) **EP 1 090 568 B1**
(45) Veröffentlichungstag und Bekanntmachung des Hinweises auf die Patenterteilung: **15.03.2006**
(21) Anmeldenummer: 00106979.8
(22) Anmeldetag: 01.04.2000
(51) Int. Cl.: A47C 7/14, A47C 9/00, B60N 2/06

(54) **Sitzvorrichtung**
Seating device
Dispositif de siège

(30) Priorität: 01.04.1999 DE 19915003
(43) Veröffentlichungstag der Anmeldung: 11.04.2001
(73) Patentinhaber: Stips, Michael, 80686 München (DE)
(72) Erfinder: Stips, Michael, 80686 München (DE)
(74) Vertreter: Rothkopf, Ferdinand

(56) Entgegenhaltungen:
- EP-A- 0 780 073
- DE-A- 4 006 608
- DE-U- 8 914 349
- US-A- 5 022 708
- US-A- 5 048 893
- US-A- 5 590 930

## Beschreibung

Die Erfindung betrifft eine Sitzvorrichtung, wie sie im Oberbegriff des Patentanspruchs 1 angegeben ist, sowie ein Verfahren zum Ermitteln individueller Sitzbewegungs- und Einstellvorgaben zur Benutzung einer solchen sitzvorrichtung.

Die Sitzvorrichtung gemäß der Erfindung eignet sich sowohl für einen ortsgebundenen Einsatz beispielsweise in Form eines Sitzmöbels als auch als Fahrzeugsitz in Kraftfahrzeugen oder an Arbeitsmaschinen und Trainingsgeräten. Generell faßt sich mit einer Sitzvorrichtung nach der Erfindung einer Vielzahl von unterschiedlichen orthopädischen und ergonomischen Gesichtspunkten optimal Rechnung tragen. In der Praxis gewährleistet die Sitzvorrichtung eine optimale Gymnastik für Becken und Wirbelsäule durch natürliche Bewegungsart.

Das menschliche Sitzen findet derzeit meist in statischer und passiver Weise statt. Auf einem Sitzmöbel, starr konfiguriert, wenn auch evtl. verstellbar oder in Teilen nachgiebig, wird zunächst eine bestimmte Anfangspositur eingenommen. Da das Bewußtsein i.d.R. anderweitig, z.B. durch Arbeit, Femsehen, Autofahren, beansprucht wird, ist der Körper der sitzenden Person in der Folge sich selbst überlassen, und mangels Einstrom angemessener Bewegungsreize erschlafft er nach und nach. Durch die Schwerkraft sinkt er irgendwie in die Sitzform ein, oder wird sogar im Fahrzeug infolge der Auf-und-Ab-Schwingungen unbewußt schrittweise hineingestaucht ("Mehlsackphänomen").

Diese Art des Sitzens, aus dem Blickwinkel der Physiologle und funktionellen Anatomie nur mit dem Prädikat "widematürtich" zu versehen, zieht zahllose Folgeschäden nach sich, von denen die der unteren Wirbelsäule (volkstümlich "Bandscheibenleiden") die prominentesten sind.

Die Vorschläge für besseres und gesünderes Sitzen sind zahlreich; als Beispiele seien hier genannt:
- "Anatomische Form" des Sitzes oder der Polsterung;
- Einstellung von Sitzteilen auf Individualmaße oder Posituren;
- Bessere Einfassung der Körperteile, darunter z.B. verstellbare Oberschenkelauflage, Lendenstützen, Rückenpolster u.v.m.;
- Massageartige Beeinflussung der Gesäß, und/oder Rückenmuskulatur durch aktive Vorrichtungen im Sitz;
- Verkippung von Sitzflächenelementen;
- Aufwulsten einzelner Elemente des Sitzes zur lokalen Stützung;
- Vorgabe andersartiger Sitzpositur in Richtung Stehen, Knien, Hocken, Kauern durch spezielle Gestellkonstruktionen;
- Teilstabile Sitze wie elastische Sitzbälle, Hocker mit Taumelfuß.

Durartige Sitzvorrichtungen sind aus US-A- 5 048 893, US-A-5 590 930, DE-U-89 14 349, US-A-5 022 708, EP-A-0 780 073 und DE-A-40 06 608 bekannt.

In der Praxis können aber alle diese Lösungen nicht völlig befriedigen da sie die biologischen Gesetzmäßigkeiten nicht in ausreichendem Maß berücksichtlgen. Insbesondere bleiben bisher die nachstehenden Forderungen an einen gesunden Sitz offen:
1. Wenn schon die Gliedmaßen beim Sitzen zwangsläufig relativ ruhig zu halten sind, sollte wenigstens die Rumpfmuskulatur dauerhaft von außen zu Muskelarbeit veranlaßt werden, um Erschlaffung und die sog. "vegetative Dysbalance" zwischen der Fülle der BewuBtseinswahrnehmungen und dem Mangel an Körperreaktion zu vermeiden.
2. Der betroffene Stütz- und Halteapparat, namentlich Becken und Wirbelsäule, sollte auch und gerade beim Langzeitsitzen fast fortwährend und biologisch wesensgemäß innerhalb der Zuträglichkeitsgrenzen bewegt werden, um Erstarrung, Stauchung, Unbehagen, einseitige Abnutzung, Verkrampfung, Mangelernährung der Gewebe und andere Degenerationstendenzen zu entschärfen.

Daher stellt sich der vorliegenden Erfindung die Aufgabe, einen ergonomischen Sitz zu schaffen, der beim Sitzen naturnahe Bewegungsabläufe auf den menschlichen Bewegungsappärat so überträgt, daß dessen anatomisch-funktionelle Gegebenheiten und Bedürfnisse beachtet werden, um ein sicheres, muskelaktivierendes, orthopädisch richtiges und ermüdungsfreies Sitzen auch über längere Zeit hinweg zu gewährleisten.

Die erfindungsgemäße Lösung für diese Aufgabe ist in den Patentansprüchen 1 und 11 angegeben; vorteilhafte Ausgestaltungen und Weiterbildungen der Erfindung ergeben sich aus den Unteransprüchen.

Insbesondere sind nachstehende Überlegungen bedeutsam für die Erfindung:
A. Die Sitzvorrichtung hat als *Hauptkennzeichen innere Beweglichkeit :* sie formt sich während der Benutzung nach einem *physiologisch idealen Pendelbewegungsgesetz* ständig oder aussetzend um.
   Dadurch wird der Sitz zum aktiven System, das nicht mehr nur das Körpergewicht recht und schlecht abträgt, sondern außerdem das neuro-muskulo-skeletale System des sitzenden Menschen gesund beansprucht, aktiviert und trainiert.
   Ein solcher Sitz wird, wie im folgenden erläutert, der tendenzielten Schädlichkeit und den Leistungsminderungen der sitzenden Lebensweise erheblich entgegenwirken können.
B.
   1. Der Sitz wird zunächst in die folgenden *Hauptelemente gegliedert,* die in der Gesamtkonstruktion getrennt voneinander, aber kooperativ zueinander angebracht werden.
      a) *Tragende Stützeinrichtung* als Basis des Gesamtsitzes, aufgebaut darauf sind zum einen die *Tragstruktur* des Sitzteils und zum anderen der *Rückenträger,* der in Längsrichtung neigbar sein kann.
      b) *Sitzteil* mit Sitzfläche; sie trägt die Hauptlast des sitzenden Körpers und ist Vollzugsort der Hauptbewegung, aufgrund spezieller Bewegungslagerung und vorzugsweise eigenen Antriebs; sie könnte in bestimmten Anwendungsfällen - z.B. für ortsfesten Einsatz im Sinne eines Hockers - das einzig verwendete Element sein
      c) *Obere Rückenstütze,* beweglich/verstellbar, vorzugsweise mit eigenem Antrieb versehen, ist auf Höhe der oberen Brustwirbel-säule/ Schulterblätter am Rückenträger angebracht
      d) *Lumbalstütze,* beweglich und verfahrbar, vorzugsweise mit eigenem Antrieb, bei Normalbetrieb idealerweise *nicht im dauernden Körperkontakt,* ist auf Höhe der Lendenwirbelsäule am Rückenträger angebracht
      e) *Sakralstütze,* vorzugsweise fest mit dem Sitzteil verbunden, stützt bzw. faßt ein das Kreuzbein, welches in festem Verbund ein Teil des Beckengürtels ist. Die Sakralstütze ist damit ein ergänzender Teil des Sitzteils zur Führung des Beckens bzw. Gesäßes.
      f) Je nach Anwendungsfall: *Kopfstütze* (z.B. in Kraftfahrzeugen), Ober-schenkelauflage(n), Armstütze(n), Seitenpolster, Fußrastplatte(n)
      g) *Steuereinheit,* über die der Betrieb der Sitzvorrichtung geregelt und gespeist wird.
   2. Abweichend von weitverbreiteter fataler Gewohnheit ist auf dem erfindungsgemäßen Aktivsitz die *Anlehnung,* wenn überhaupt, im wesentlichen nur noch im oberen Rückenbereich notwendig; in Fahrzeugen allerdings ist letzteres naturgemäß unerläßlich.
      a) Daher ist auch der Körper des sitzenden Menschen wieder angehalten, ähnlich wie beim Gehen oder Reiten, die *Rumpfmuskulatur* - ihrer natürlichen Bestimmung gemäß - voll zum Versteifen und Balancieren der Wirbelsäule einzusetzen.
      b) Nach dem Hauptprinzip der Erfindung wird das *Sitzteil* beim Betrieb der Sitzvorrichtung relativ zum Gesamtsitz - vorzugsweise durch einen zwangsführenden Antriebsrnechanismus - in *räumliche Pendelbewegung* versetzt, vorzugsweise kombiniert mit leichter *Wechselrotation,* deren Rotationsachse etwa mit dem jeweiligen momentanen Pendelradius zusammenfällt
         Durch diese Bewegungsform wird vor allem die *Rückenlängsmuskulatur* ganz wesensgemäß in wechselseitig alternierende Zugbeanspruchung versetzt, das gleiche gilt vom bindegewebigen *Bandapparat.* Gleichzeitig erfahren die *Wirbelkörper* und die zwischengelagerten Gelkissen der *Bandscheiben* die ihnen "auf den Leib geschneiderte" ziehharmonikaartige Wechselbeanspruchung mit wandernder Krafteinleitung, und dies geschieht bei minimaler Scher- und Stauchbelastung, was die lebenswichtige "Saftatmung" der Bandscheiben begünstigt.
      c) Analog positive Wirkungen hat ein sauberes Durchschwingen des Wirbelsäulensystems auch auf den begleitenden *GefäB- und Nervenapparat,* ein rückkoppelnder Beitrag gegen Erschlaffung und Ermüdung. Die Erfahrung lehrt des weiteren, daß das gesamte Rurnpfsystem, einmal angeregt, aus eigenem Antrieb die Aktionen mitvolizieht, eine Art gymnastischer Bewegungsfreude wiedergewinnt.
      d) Hinzu kommen Impulse des Wohlbefindens, die aus der Durcharbeitung der *inneren Leibesorgane* resultieren. Die Erklärung dafür dürfte darin liegen, daß an dem physiologischen Aktivierungsprozeß neben der Bauchwand- und Beckenmuskulatur auch das Paar der großen Psoasmuskeln teilnimmt, die von der Wirbelsäule ausgehend den Bauchraum schräg nach unten-außen durchziehen und innen an den Oberschenkelknochen ansetzen, so daß die Peristaltik und die Durchblutung der Organe In Becken und Bauch durch die Rumpfbewegung heilsam beeinflußt wird. Zu vermuten ist, daß dieser Effekt, gerade bei "Vielsitzern", auch der Prävention von chronischen Krankheiten der inneren Organe (z.B, auch der Prostatadrüse) dient.
C. Wichtig für die besagte *räumliche Pendelmotorik* des Sitzteils ist das Folgende:
   *1. Biomechanisch richtige Form der Bewegung:* die Pendelbahnen des Sitzteils folgen nur bel vereinfachter Konstruktton einer gedachten reinen Kugelschale wie bei einem Einfadenpendel (vergleichbar einem Zimmermanns-Senklot).
      Idealerweise ist das *Momentanzentrum* als Pol der Pendelbewegung nicht in dieser Weise in einem Kugelmittelpunkt fixiert, sondern *wandert* in stetiger Weise in einer gedachten medianen Ebene in oder nahe der Körpersymmetrieebene, deutlich von der Sitzfläche entfernt, so daß sich als Hüllfläche der Bewegungsbahnen ein stufenlos-variabel gekrümmtes Sphäroid ergibt, - im folgenden *Pendelflächensphäroid* genannt - welches nach oben konkav ist und prinzipiell spiegelsymmetrisch in gleicher Orientierung wie der Körper des Sitzenden.
      a) Die Lagerung des Sitzteils wird erfindungsgemäß so ausgebildet, daß sie das besagte Pendelflächensphäroid mit Hinblick auf die Eigenart der Wirbelsäule in einer Weise formt, die das Becken des Sitzenden die *natürlichen Bewegungen* nachvollziehen läßt, wie es sie bei fixiertem Schultergürtel frei von sich aus (wie beim Achselhang des Barrenturnens) ausführen würde, sobald es beugend-streckende und/oder seitlich schwenkende und/oder kreisende Bewegungen auszuführen hätte.
      b) Zum ersten liegt damit der Wanderbereich für das Momentanzentrum der Sitzflächenpendelung etwa im Verschnitt aus der unter /C.1./ genannten Medianebene und dem Oberkörperbereich des Sitzenden, beginnend etwa oberhalb des Bauchnabels.
      c) Zum zweiten wird die Kippkomponente der Sitzfläche in kyphosierender Richtung (vorwärts-beugend) stärker sein als in der lordosierenden Richtung (rückwärtsstreckend) oder in den seit- beugenden Richtungen.
      d) Zum dritten wachsen die Kipp- und Hubkomponenten mit dem Abstand von der Neutralstellung trigonometrisch.
      e) Zum vierten werden ergänzend zur Seitauslenkung, vor allem gegen die Endlagen zu, leichte Innenrotationsanteile um eine Hochachse hinzutreten.
   2. Die *Notwendigkeit der vorbeschriebenen Bewegungsform* ergibt sich aus folgenden Tatsachen:
      a) Die *menschliche Wirbelsäule* - mit ihren Bandscheiben, großen und kleinen Gelenken, Nervenauslässen, Kapseln, Bandzügen, Muskelsträngen und dem Wirbelkanal mit Rückenmark - ist nicht eine beliebig verformbare "Perlenschnur", sondern eine relativ steife Aufreihung der Wirbelkörper, die sich gegenseitig in engen Grenzen führen und halten, vergleichbar einer "Gleiskette", die sich nur mit bestimmten und beschränkten Freiheitsgraden in einer typischen auf- und abrollenden *Evolventenbewegung* krümmen läßt.
         Damit ist die Wirbelsäule sehr unempfänglich für scherende Beanspruchung, wie sie z.B. bei einem reinen Kippen des Beckens erzwungen wird: eine solche kann dann nur in Form einer S-förmigen Doppelkrümmung kompensiert werden, und das ergibt bei der begrenzten Länge und engen Bandzügelung starke Fehlbelastung, hinsichtlich von Scherkomponenten und der noch übleren stauchenden Pressung auf die Bandscheiben, die dadurch weitgehend ihres Stoffwechsels beraubt werden.
         Zusammenfassend gesagt: ein Krümmen der Wirbelsäule ohne Auslenkung der distalen (abliegenden) Elemente aus der Längsachse, wie es von einer anderen als der hier vorgeschlagenen Pendelkinematik oder gar von der konventionellen starren Sitztechnik erzwungen wird, ist nichts anderes als unphysiologisch und schädlich, und wird denn auch massenhaft bestraft durch Unbehagen, Schmerzen und Degeneration.
      b) Dieses *evolventenartige Krümmungsverhalten der Wirbelsäule* ist von vornherein auch *in natura* gegeben. Er ist z.B. von der Seite zu beobachten, wenn ein Mensch sich verbeugt: er knickt nicht irgendwo den Rücken ab, sondern macht einen "runden Rücken", und die Schädelbasis als Endglied bewegt sich deutlich nach vorwärts.
         Einen zweiten Evidenzbeweis liefert ohne jeden Meßaufwand eine gehende Person, die einen weiten, aber langen und gut abschließenden Pullover trägt: Bei jedem Schritt wird das Becken notwendigerweise etwas gekippt, um das Schwungbein vom Boden zu heben und gleichzeitig den Hüftkopf des Standbeins näher zur vertikalen Schwerachse zu rücken - und am kreuzweise wechselnden diagonalen Faltenwurf des Pullovers kann man eindeutig relativ zum Schultergürtel die seitliche Auslenkung des Beckens im Gleichklang mit seiner Kippung ablesen.
         Andere deutliche Anschauungsbeispiele für die Pendelkinematik des Beckens sind in Form von Bauchtanz oder Hula-Hoop-Gymnastik allgemein bekannt.
      c) Aus der Anatomie der großen und kleinen Wirbelgelenke sowie aus dem Funktionszusammenhang Wirbelsäule - Becken - Oberschenkel ergibt sich, unterstrichen durch das angenehme Empfinden beim Bewegungsversuch, die Ratsamkeit einer leichten *Scheibendrehung der Sitzfläche* zusätzlich zur Seitverschwenkung: geht sie z.B. nach links, dreht sie sich im Uhrzeigersinn, und umgekehrt. So wird erreicht, daß das Becken dem natürlichen Bestreben nach bei Querschwenkung auch leicht einwärts rotiert wird. Zudem werden dadurch Knie und Unterschenkel bei Querfahrt der Sitzfläche nicht nennenswert seitlich verlagert, ein besonders beim Sitzen im Fahrzeug erwünschter Effekt.
   3. Nach den vorgenannten Forderungen werden erfindungsgemäß die bewegungsführenden Elemente der Sitzflächenlagerung bzw. -aufhängung so ausgebildet bzw. betrieben, daß die prinzipiell resultierende Pendelkinematik zugleich durch *Formbarkeit* den meßbaren, individuellen orthopädischen Verhältnissen des Benutzers ideal angepaßt werden kann.
      Es wird daher vorgeschlagen, das unter /C.1.a)/ genannte "Achselhang"-Prinzip zur Grundlage von *Verfahren* zu machen, die zum einen der Entwicklung allgemeiner Sitzbewegungsprogramme und zum anderen der Ermittlung von persönlichen orthopädischen Gegebenheiten eines Benutzers dienen.
   4. Mittels der erfindungsgemäßen *Zwangsführung* der Sitzflächenbewegung durch den Antrieb werden für den Sitzenden unangenehme Bewegungsüberraschungen oder das Gefühl unsicheren Sitzens im Sinne einer "Wackeligkeit" ausgeschlossen. Dementsprechend sind die Schwingungsfrequenzen der Pendelbewegung typischerweise im Bereich bis ca. 1/s zu halten.
D. Weiterhin ist für die Erfindung Folgendes wichtig:
   1. Zur Verwirklichung dieses Steuerungsverfahrens wird zwecks Führung und Energieversorgung der aktiven Teile der Sitzvorrichtung eine separate *Steuereinheit* vorgesehen, die vorzugsweise eine eigene *Sitzintelligenz* beherbergt.
      a) *Programmatische Vorgaben* für Bewegungssequenzen können in der Steuereinheit in Datenspeichern oder Festschaltungen niedergelegt sein und ihr außerdem in Form von externen Datenträgern zugeführt werden.
         Die Programme können in verschiedensten Ausführungen günstig und einfach erstellt werden unter Bezug auf Verfahren wie unter /C.3./ beschrieben und unter Nutzung orthopädischer Erkenntnisse.
      b) Zum anderen ist es möglich, in der Steuereinheit die Programmvorgaben aktuell *in Echtzeit* zu erzeugen, nach zweckgerechten Grundregeln aufgrund eines Zufallsgenerators, oder auch aufgrund von Auskoppelungen aus externen Signalquellen wie z.B. Musik- oder TV- Geräten usw.
         Im letzteren Fall werden Hörwahmehmung und körperliche Bewegungsreize synchronisiert, sicherlich ein zusätzlicher Beitrag zur psychovegetativen Vitalisterung eines Sitzbenutzers.
      c) Die Programmvorgaben werden in einen vorzugsweise elektronischen *Prozessor* eingespeist und dort zur eindeutigen Soll-Steuerung bzw. Regelung aller Aktionen verarbeitet, die über entsprechende Verstärker oder Steuerventile usw. an die Stell- und Antriebselemente geleitet wird, und ggf. von ihnen Rückmeldeslgnale hinsichtlich der Ist- Positionierung erhält.
      d) Dieses Verfahren wird angewendet nicht nur auf das Sitzteil, sondern ggf. auch auf die *anderen angetriebenen Elemente* des Gesamtsitzes, insbesondere aktive Verstellelemente für die Parameter der Pendelkinematik des Sitzteils, und auch die obere Rückenstütze und Lumbalstütze, die ggf. in Koordination zum Sitzteil arbeiten müssen.
      e) Beeinflussung oder zeitweiser Ersatz der Bewegungs- und Positionierprogramme *durch Signale manueller Herkunft* oder aus *diversen Sensoren* sollen über die Steuereinheit möglich sein.
         In Fahrzeugen läge es nahe, die beschriebene Steuereinheit in einen vorhandenen Bordcomputer, die Bedlenungselemente in die allgemeine Bedienumgebung zu integrieren und fahrzeugseitige Sensorik, vor allem für Fahrgeschwindigkeit und verschiedenste Beschleunigungen, mitzubenutzen.
         Ebenso ist es denkbar, aus externen Fahrzeuginformations- und Leitsystemen Daten bzw. Signale zu entnehmen, die zur sinnvollen Beeinflussung der Sitzbewegungen zu benutzen sind, zum Beispiel "warnende Vibrationen" vor Stau- oder Unfallsituationen.
   2. Das *Befahren der Bewegungsbahnen* könnte auf Dauer allein in wählbaren, verschiedenartigen, in sich stereotypen Ablaufzyklen ausgeführt werden.
      Besser und vorzugsweise geschieht es durch besagte "Sitzintelligenz" in Form einer softwaremäßigen Steuerung. Somit kommen *Bewegungsprogramme* zum Tragen, mit denen man wünschenswerte Kombinationen aus Längs-, Quer-, Kipp- und Rotationsbewegungen in unendlich vielfältiger und abstimmbarer Weise realisieren kann.
      Diese Bewegungsprogramme können zur Veranschaulichung in vielerlei Hinsicht mit *musikalischen Abläufen* verglichen werden. Demnach können kurze Sequenzen wie "Motive", längere wie (Melodie-) "Linien" und lange wie "Sätze", mittels Wiederholung, Abwechslung, Durchmischung, Überlagerung, mit kleinerer oder größerer Intensität, in verschiedenen Grundtempi, mit verschiedenen Expressivitäten usw. letztlich zu ganzen "Bewegungssymphonien" komponiert werden.
      Der Aufenthalt auf diesem Sitz hat damit eine gewisse Verwandtschaft zum Tanz, im Sinne von Belebung, gesunder Bewegungsfreude und einer entspannenden Körperbetätigung.
   3. Im unbegrenzten "Universum der Sitzflächenbewegung" kann der *Benutzer* "die Platte wechseln", die Intensität regeln, das Tempo variieren, seine persönliche "Plattensammlung" abspielen, selbst *Abläufe komponieren* usw.
      Denkbar wäre z.B., daß der Benutzer mittels "Joystick" die Sitzbewegungen nach seiner Annehmlichkeit frei steuert, und dieser Vorgang kann gleichzeitig abgespeichert und als Programmkonserve weiterbenutzt werden.
      Ebenso könnten z.B. nach orthopädischen Rehabilitationskriterien individuelle Programme erstellt werden, um Patienten auf einem Trainingsgerät zu beüben.
   4. Aus dem Fahrzeug könnten der Sitzintelligenz Meldungen über aktuelle Fahrgeschwindigkeit oder Fahrbahnwelligkeit zugeleitet werden, die dort in Art einer laufenden *Trendauswertung ("selbstlernend")* dazu benutzt werden könnten, Parameter wie Bewegungsausschläge oder -frequenzen entsprechend automatisch anzupassen; beispielsweise könnte eine lange mittelschnelle Autobahnfahrt mit einem etwas schwungvolleren Pendeln begleitet werden als eine Fahrt über hügelige, kurvige und hoppelige Dorfstraßen usw.
   5. Dem Sitz können weiterhin *ausgezeichnete Stellungen* zugeordnet sein, in die er sich auf Anforderung oder automatisch (z.B. bei Entlastung) einstellt, wie zum Beispiel:
      - Neutral- oder Mittenstellung
      - Ein- und Ausstiegsstellung
      - Abstützstellung gegen Fahrzeugneigungen oder Kurven fliehkräfte
      - Ruhe/Schlafstellung
      - Gedrehte Stellung, z.B. für Bedienvorgänge
      - In Fahrzeugen Frontalcrash-Stellung, bei der die Sitzfläche möglichst weit vorn und möglichst vom hochgekippt sein soll, um "submarining" zu reduzieren

      Zur Erreichung solcher Stellungen kann im Antrieb ein Schnellgang eingerichtet werden oder es kann das Sitzteil in Art einer Schnellauslösung unter Trennung von Antriebselementen in bestimmte vorgesehene Positionen einrückbar sein.
   6. Denkbar ist auch die *gewollte Abtrennung* oder Abschaltung von Antriebselementen, um allein durch Körperbewegung den Sitz zu "befahren", wobei federnde Rückstellung zu einer Mittellage und Dämpfung zur Vermeidung von "Wackeligkeit" vorgesehen werden kann.

Kurz gesagt: mit Hilfe des erfindungsgemäßen Steuerungsverfahrens kann die Sitzvorrichtung jeden gewünschten Bewegungsvollzug und jede gewünschte Positionierung ohne Eingriff in die Mechanik durchführen, indem beliebige Akutsignale, Bewegungsprogramme oder Einstellbefehle in die Steuereinheit eingespeist werden.-

Für die praktische Ausführung verdienen noch folgende weitere Details Interesse und Beachtung:
E. Die *obere Rückenstütze* muß in Fahrzeugen so gestaltet werden, daß sie, mehr als bei herkömmlichen Sitzen notwendig, dem Sitzenden *seitlichen Halt* gibt, weil im Regelbetrieb der Rücken nicht mehr in seiner ganzen Länge ständig auf einer durchgehenden Rückenlehne mit ihrem prinzipiellen Wannencharakter aufliegt.
   1. Als Folge der Hauptbewegung nach /B.2.b)/ können sich kleine Längsschiebungen der Brustwirbelsäule ergeben, denen durch vertikale Bewegung der *oberen Rückenstütze* entsprochen wird, um Stauchung oder Reibung zu vermeiden. Mehr noch, durch gezieltes Herauf- und Herunterfahren der oberen Rückenstütze, oder sogar durch leichte Schwenkbewegungen um eine etwa sagittale (blickrichtungsparallete) Achse, alles in Koordination mit der vom Becken veranlaßten Verformung der Wirbelsäule, kann auf diese ein zusätzlicher Dehn- und Entspannungseffekt ausgeübt werden.
   2. Für *stärkeres Rückwärtsneigen* des Rückenträgers im Dauerbetrieb, z.B. bei Ruhesesseln oder in flachen Fahrzeugen, werden folgende Maßnahmen vorgesehen:
      a) Um das Momentanzentrum der Pendelkinematik in der zuträglichen Relativlage zum Becken-Wirbelsäulensystem zu halten, muß die Tragstruktur als Ganzes angemessen mit nach hinten verkippt bzw. verschwenkt werden.
      b) Wird die stärkere Rückneigung nur vorübergehend (z.B. Ausruhestellung) gebraucht, könnte das Sitzteil einfach in passende Position gefahren und ruhiggestellt werden.
F. Die *Lumbalstütze* ist im Normalbetrieb nur ausnahmsweise im Körperkontakt, um der Lendenwirbelsäule Bewegungsfreiheit und Aktivitätsanreiz zu belassen.
   1. Die Lumbalstütze kann bei Bedarf, z.B. bei starker Rückneigung des Rückenträgers, zur dauernden Stützung an die Lendenwirbelsäule herangefahren werden, um Durchhängen bzw.
      Scherbeanspruchung auszuschließen.
   2. Beim längeren Einsatz mit Körperkontakt müßte die Lendenstütze mit dem Sitzteil koordiniert mitbewegt und/oder die Auslenkungen der Sitzfläche begrenzt werden können, um Reibung und Irritation zu vermeiden.
   3. in Fahrzeugen muß das Herausfahren aus dem kraftschlüssigen Körperkontakt auf geringen Weg (typisch ca 10 mm) begrenzt sein, damit bei unfallhaftem Anstoß von hinten die Lendenwirbelsäule abgestützt ist.
G. Die *Lagerung des Sitzteils* kann auf verschiedene Weise und mit unterschiedlicher Anzahl der realisierten Freiheitsgrade ausgeführt werden. Je nach Einbaufall, Platzverhältnissen oder angestrebtem Komfortgrad können konstruktiv Teile der beschriebenen Funktionalitäten bzw. Freiheitsgrade weggelassen werden, z.B. ist eine alleinige Quer- oder Längsschwingung entsprechend der erfindungsgemäßen Pendelkinematik immer noch besser als eine konventionelle Sitzgelegenheit.
   Die alles tragende *Stützeinrichtung* ruht auf dem Unterboden. Bei Sitzmöbeln könnte sie eine Roll- und Drehstuhlfunktion aufweisen. In Fahrzeugen wird sie in herkömmlicher Weise schlittenartig in der Längsrichtung u. evtl. in der Generalhöhe und -neigung positionierbar sein, kann auch mit Federung und evtl. mit Dämpfung ausgerüstet sein, um unliebsame Schwingungen vom Sitzaufbau fernzuhalten.
   Für die *bewegungsführende Lagerungsverbindung* zwischen Tragstruktur und Sitzteil werden im folgenden einige Ausführungsmöglichkeiten beschrieben. Dabei können grundsätzlich die Aufgabe der Gewichtsabtragung und die des Bewegungsantriebs nicht nur von jeweils eigenen Elementen übernommen werden, sondern es gibt auch Bauweisen, in denen beide Aufgaben von ein und demselben Element erledigt werden.
   Bevorzugt wird eine solche Lagerungsverbindung vorgeschlagen:
   1. als ein großes *Lagerschalenpaar*: eine Kugel-Teilschale liegt auf einer etwas größeren konzentrischen Kugel-Teilschale gleitend oder über Wälzkugeln auf und trägt das Sitzteil. Mit dieser Ausführung allein kann nur eine Kugelschalenform des Pendelflächensphäroids verwirklicht werden.
   2. aus mehreren kleinen (typisch 3-4) *Lagerflächenpaaren,* deren obere Lagerflächen tangential zum Pendelflächensphäroid an der Untersicht des Sitzteils, die unteren Gegenflächen parallel oder annähernd parallel dazu an der Obersicht der Tragstruktur befestigt sind.
      Je eine Lagerfläche ist dabei auf ihrer Gegenfläche abgestützt
      (a) gleitend oder
      (b) über eine Wälzkugel, wobei
      (c) gewölbte Lagerflächen oder
      (d) ebene Lagerflächen
      (e) ggf. in verschiedenen Paarungsarten zum Einsatz kommen können : eben/eben, gewölbt/gewölbt, eben/gewölbt, gewölbt/eben.
         Dabei wird über die Feinform der erzeugbaren Bewegungsbahnen entschieden durch:
         - Paarungsart der Flächen gem. /e/
         - die Neigungswinkel der Lagerflächen gegenüber der Sitzfläche oder gegeneinander
         - die gegenseitigen Abstände der Lagerflächen
         - die gegenseitige Ausrichtung der "Fallinien" der Lagerschalenpaare
         - die Positionierung des ganzen Lagerflächensystems gegenüber der Sitzfläche nach Abstand und Winkellage
      (f) Eine Verstellbarkeit der Bewegungsparameter der Sitzilächenkinematik, z.B. zur Anpassung an Körpermaße, kann erreicht werden, indem mit Hilfe passiver oder aktiver Stellelemente die ebengenannten Neigungswinkel, Abstände und Ausrichtungen der Lagerflächenpaare veränderbar gehalten werden.
      (g) Für aktive Stellelemente nach /f)/, die evtl. unter der vollen Gewichtslast kleine aber präzise Stellwege zu liefern haben, werden als besonders vorteilhaft elektrische Schrittmotoren vorgeschlagen, die über starke Untersetzung auf flachgängige selbsthemmende Bewegungsgewinde arbeiten.
   3. als räumliche oder ebene *Gelenkkettenkombination* in Art der Viergelenkgetriebe; durch geeignete Anordnung und Bemessung der stehenden oder hängenden Schwingen und Koppeln kann die gewünschte Kinematik mit einer gewissen Näherung verwirklicht werden.
   4. als *Doppelschlittenkombination,* wobei z.B. ein Schlitten entlang längsorientierter bogenförmiger Führungen verfährt, ein zweiter darauf aufgebauter Schlitten entlang querorienterter bogenförmiger Führungen verfährt, letzterer trägt das Sitzteil.
   5. als Konstruktion, bei der anstelle bogenförmiger Führungen *geradegestreckte Führungen* oder ein in einer Ebene zweidimensional geführter Schlitten für die Quer- und/oder Längsfahrt des Sitzteils eingesetzt werden, wobei durch zusätzliche Hubelemente im Bereich der Tragstruktur oder des Sitzteils für die Kippkomponenten der Sitzfläche gesorgt wird.
   6. als Konstruktion, bei der durch Verwendung rein linearführender Tiagelemente nur die translatorischen Komponenten geliefert werden, wie es unter den vorangehenden Punkten /3., 4., 5./ der Fall ist, wobei die Rotationskomponente der Sitzfläche, die - unbenommen einer etwaigen Drehstuhlfunktion des Gesamtsitzes - geringgradig ist, durch ein separates *Drehlager* oder eine drehelastische Festlagerung sichergestellt wird.
   7. als Kombination von mehreren (typisch sechs) *Hubzylindern,* die z.B. paarweise in Dreiecksgeometrie arbeiten, indem jeweils zwei Kolbenköpfe an einem gemeinsamen Anlenkpunkt am Sitzteil angreifen, während die sechs Zylinderfußpunkte auf der Basis so plaziert sind, daß sich eine eindeutige räumliche Positionierung als Funktion der Kolbenausfahrten ergibt.
   8. als Kombination von Lagerflächenpaaren wie unter 2.) beschrieben, in denen mehrere (typisch zwei) Lagerflächenpaare durch analog positionierte *Scheibenrotations-Aktoren* ersetzt sind, weiche neben der Stützkraft auch tangentiale Bewegungskomponenten liefern. Beispielsweise wäre ein solcher Scheiben-Aktor als elektrischer oder hydraulischer Drehantrieb auszuführen, der einen exzentrisch sitzenden Tragzapfen besitzt, auf dem das Sitzteil kugelig angelenkt ist. Beim koordinierten Rotieren der Scheibenaktoren wird die Sitzfläche in eine kreisend- taumelnde Bewegung versetzt.

   Die Pendelkinematik der Sitzfläche könnte auch durch geeignete andere Kombinationen aus den eben genannten oder anderen Elementen vollständig oder näherungsweise erreicht werden.
H. Der *Antrieb des Sitzteils* kann ebenfalls auf verschiedene Weise realisiert werden. Dabei gibt es zwei Grundprinzipien:
   1. Ein Lagerelement übt *gleichzeitig* Antriebsfunktionen aus (wie z.B. unter G., 5. bis 8. angegeben).
   2. Ein Antriebsteil leitet separat nur *Dynamik* in das Sitzteil ein (wie z.B. unter G., 1. bis 4. angegeben).

   Als *Antriebsaktoren* kommen vorzugsweise in Frage:
   - Elektromotorische Spindeltriebe ("elektromechanische Hubzylinder")
   - Hydraulikzylinder
   - Fluidbälge
   - Pneumatikzylinder
   - Elektrische oder hydraulische Kurbeitriebe, mit Übertragern wie Schubstangen, Winkelhebel, Nocken, Kulissen, Kurvenelementen usw.
   - Elektrische oder hydraulische Antriebe, wirkend über Seil, Gurt, Kette, Zahnstange, Riemen, Exzenter usw.

   Bei der Steuerung der Antriebselemente ist eine Begrenzung der maximalen Kraft vorgesehen, um bei Zufallshemmnissen Zerstörungen im Mechanismus oder Schaden beim Benutzer zu vermeiden.
I. Als grobe Anhalts- Maximalwerte für die orthopädischen Bewegungsparameter der Sitzfläche könnten nach erster Abschätzung gewählt werden:
   - Translationsausschlag von der Neutrallage 80 mm
   - Rotationsausschlag von der Neutrallage 15 Winkelgrad
   - Translationsgeschwindigkeit bis zu 500 mm/s
   - Maximaler Kippwinkel in vorderster Stellung 25 Winkelgrad
   - Maximaler Kippwinkel in hinterster Stellung 15 Winkelgrad
   - Maximaler Kippwinkel in seitlichster Stellung 20 Winkelgrad.

Nachstehend wird die Erfindung unter Bezugnahme auf die Zeichnungen anhand von Beispielen noch weiter im Detail erläutert; dabei zeigen in der Zeichnung:
- Fig. 1: eine Prinzipskizze der erfindungsgemäßen Sitzvorrichtung als Schnitt inSeitenansicht, mit schematischer Darstellung der Bewegungsführung für die Pendelkinematik der Sitzfläche und mit einer daraufsitzenden Person, von der die relevanten Teile von Becken und Wirbelsäule wiedergegeben sind
- Fig. 2: einen Prinzip- Frontalschnitt der Sitzvorrichtung passend zu Fig.1
- Fig. 3: eine Prinzip- Draufsicht der Sitzvorrichtung passend zu Fig. 1
- Fig.4: eine Bewegungsführung als ein großes gewölbtes Gleit-Lagerschalenpaar
- Fig. 5: eine Bewegungsführung als ein großes gewölbtes Lagerschalenpaar mit Kugeln
- Fig. 6: eine Bewegungsführung mit Flächenpaarungen "Ebene/Kugel/Ebene"
- Fig. 7: eine Bewegungsführung mit Flächenpaarungen ''Wölbung/Kugel/Wölbung"
- Fig. 8: vier Lagerelemente mit Verstelleinrichtungen zur Beeinflussung von Parametern der Pendelkinematik
- Fig. 9: eine Ausführungsform der Sitzvorrichtung mit zwei gekreuzten bogengeführten Schlitten mit Drehlager, in Seitenansicht
- Fig.10: die Rückansicht zu Fig. 9
- Fig.11: eine Ausführungsform der Sitzvorrichtung mit einer Sitzflächenlagerung aus drei Kugel-Lagerschalenpaarungen und einem Sltzflächenantrieb aus drei Linearschubelementen
- Fig.12: eine Ausführungsform der Sitzvorrichtung mit zwei gekreuzten angetriebenen Linearschlitten, drei Hubzylindern und einem Drehkranz
- Fig.13: eine vereinfachte Aersführungsform der Sitzvorrichtung mit einer Bogenführung, einer Lagerschalenpaarung und einem Scheibenrotationsaktor.
- Fig.14: ein Schemabild des seitlich verschwenkten menschlichen Beckens mit Lendenwirbelsäule und Sitzfläche

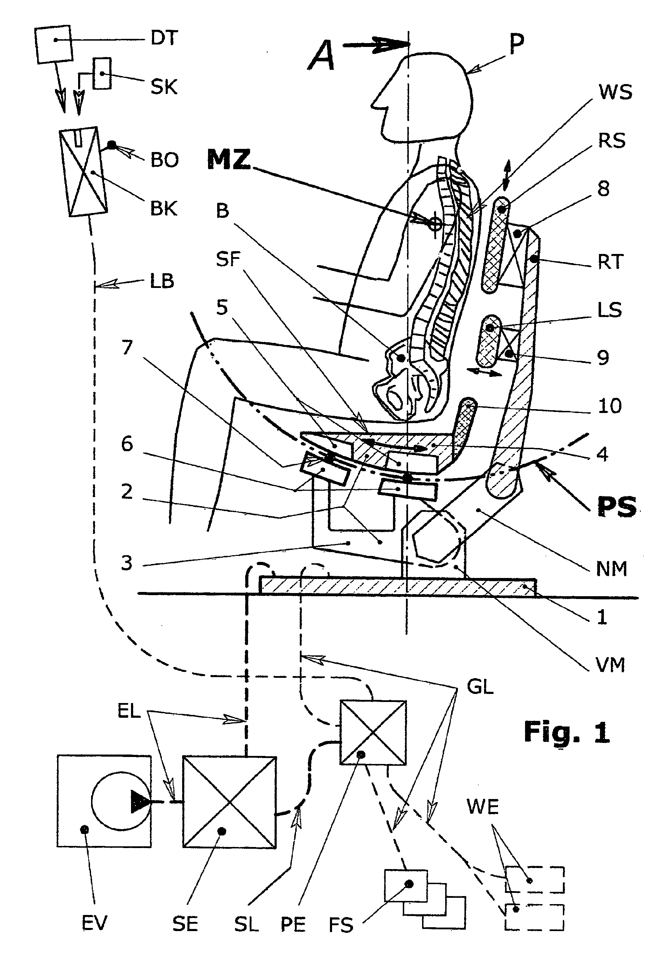

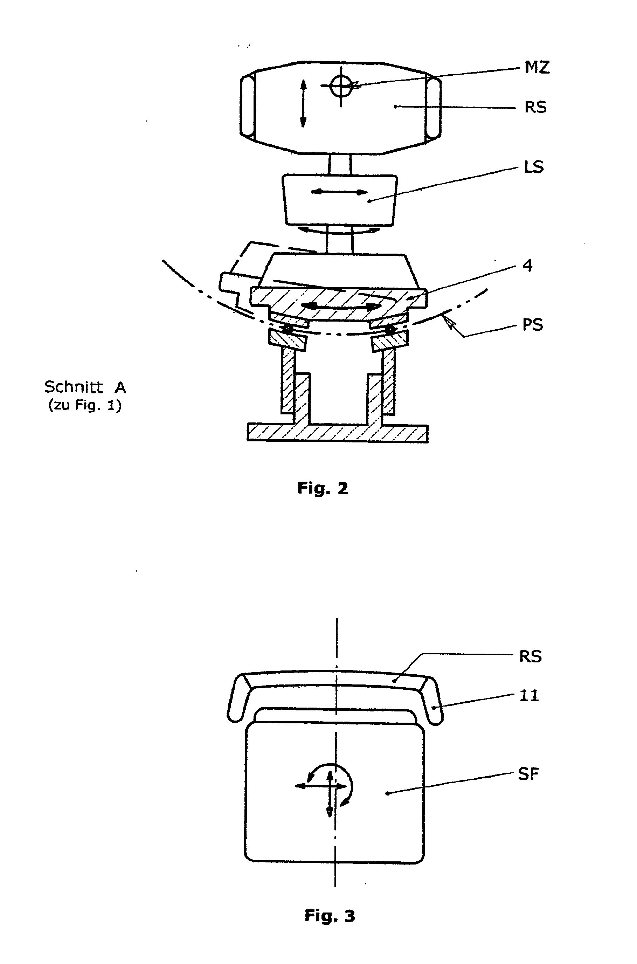

***Fig. 1*** zeigt die tragende Stützeinrichtung **1,** an der über Neigemechanik **NM** der Rük-kenträger **RT** und über Verkippmechanik **VM** die Sitzunterlage **2** befestigt sind.
Letztere besteht aus der Tragstruktur **3** und dem Sitzteil **4,** das an seiner Obersicht die Sitzfläche **SF** und die Sakralstütze **10** aufweist. Darauf sitzt der Benutzer **P,** von dem man Becken **B** und Wirbelsäule **WS** erkennen kann. Im Beispiel der Fig. 1 wird die erfindungsgemäße Pendelkinematik der Sitzfläche **SF** (deren Längskomponente ist durch Bewegungspfeil angedeutet) dadurch erzeugt, daß auf der Tragstruktur **3** vier gewölbte Lagerflächen **6** tangential zum Pendelfächensphäroid befestigt sind, auf denen sich über Kugein **7** korrespondierend vier gewölbte Lagerflächen **5** abstützen, die ihrerseits an der Untersicht des Sitzteils **4** befestigt sind.

Der Rückenträger **RT** trägt im Bereich der Lendenwirbelsäule die Lumbalstütze **LS**, die durch ihre Halterungseinheit **9** gemäß /F.1./ Vorwärts/Rückwärts- und gemäß /F.2./ Seiten- und Schwenkbewegungen ausführen kann, durch Bewegungspfeile angedeutet.

Die Obere Rückenstütze **RS** ist durch eine eigene Halterungseinheit **8** am Rückenträger **RT** befestigt. Diese ist dazu vorgesehen, der Rückenstütze elastische Vertikal-bewegungen zu ermöglichen und ihr ggf. durch eigene Antriebselemente die von der Steuereinheit auferlegten Auf/Ab- und ggf. Schwenkbewegungen zu erteilen, wie durch Bewegungspfeile angedeutet ist.

Durch die Neigemechanik **NM** kann der Rückenträger **RT** so in der Rückneigung verstellt werden, daß zwischen **Sitzteil 4** einerseits und Rückenstütze **RS** sowie Lumbalstütze **LS** andererseits die geeignete Relativposition beibehalten wird, wobei ggf. gemäß /E.2.a)/ die Tragstruktur **3** durch Verkippmechanik **VM** in geeigneter Weise mitverkippt wird.

Weiterhin sind zu erkennen die Energieversorgung **EV** (z.B. Hydraulikpumpe beim Fahrzeugmotor), die Steuereinheit **SE** und die verbindenden Energie- und Steuerleitungen **EL.** Die Steuereinheit **SE** erhält über Steuerleitung **SL** Vorgaben aus der Prozessoreinheit **PE,** die ihrerseits mit verschiedenen Signalquellen verbunden ist.
Zur Bedienkonsole **BK** mit Bedienorganen **BO** passen ein externer Datenträger **DT** für Bewegungsprogramme (z.B. Diskette oder CD-ROM) sowie eine Steckkarte **SK,** die persönliche Parameter des Benutzers für den Sitzbetrieb enthält. Über das Leitungsbündel **LB** werden Signale und nötige Kleinenergie zwischen Bedienkonsole **BK** und Prozessor-einheit **PE** befördert, in der auch ggf. über Geberleitungen **GL** Signale aus fahrzeug-seitiger Sensorik **FS,** aus externen Wiedergabe- und Empfangsgeräten **WE** und aus sitzseitigen Sensoren, z.B. für Positionierungsdaten, eingehen.
Als Pendelflächensphäroid ist in Fig. 1 vereinfachend eine Kugelschale - ohne Anspruch auf erfindungsgemäß korrekte Lage und korrekten Radius - angenommen. Für sie sind das zugeordnete Momentanzentrum **MZ** und die Spur in der Zeichenebene **PS** eingezeichnet.

***Fig. 2*** zeigt korrespondierend zu Fig. 1 einen Frontalschnitt, in dem vom Sitzteil **4** die quere Bewegungskomponente der Pendelbewegung, die Vertikalfahrt der oberen Rückenstütze **RS** und die Querfahrt und Schwenkung der Lumbalstütze **LS** angedeutet sind. Auch in dieser Projektion sind das Momentanzentrum **MZ** und die Projektionsspur **PS** der Pendelbewegung, ohne Anspruch auf korrekte Lage, sichtbar gemacht.

***Fig.* 3** zeigt korrespondierend zu Fig. 1 eine Aufsicht auf die Sitzfläche **SF** des Sitzteils **4,** mit Repräsentationspfeilen der horizontalen Bewegungskomponenten im Sinne von Translation und Rotation der Sitzfläche **SF.** Des weiteren ist die obere Rückenstütze **RS** dargestellt, mit Seitenteilen **11,** die ihre erhöhte seitliche Einfassungsaufgabe im Fall eines Fahrzeugsitzes versinnbildlichen.

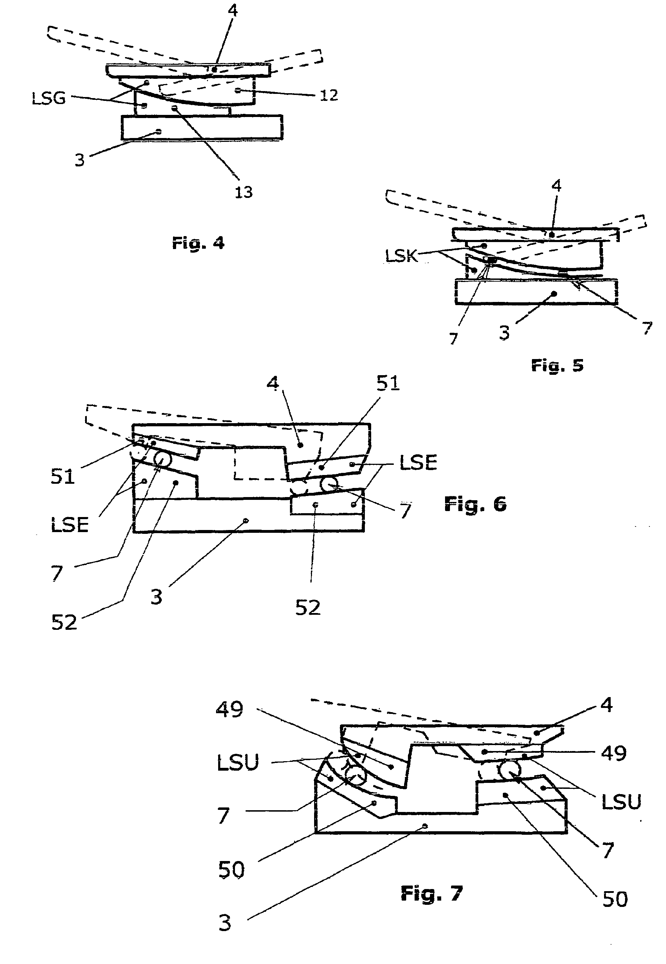

***Fig. 4*** zeigt im seitlichen Schnitt als bewegungsführende Verbindung zwischen Tragstruktur **3** und Sitzteil **4** ein großes gewölbtes Lagerschalenpaar **LSG** als Gleitlager, bestehend aus konvex gewölbter Oberschale **12** und konkav gewölbter Unterschale **13.**

***Fig. 5*** zeigt im seitlichen Schnitt als bewegungsführende Verbindung zwischen Tragstruktur **3** und Sitzteil **4** ein großes gewölbtes Lagerschalenpaar **LSK** als Kugellager.

***Fig. 6*** zeigt im seitlichen Schnitt als bewegungsführende Verbindung zwischen Tragstruktur **3** und Sitzteil **4** Lagerschalenpaarungen aus ebenen Flächen **LSE** mit Kugeln.

***Fig. 7*** zeigt im seitlichen Schnitt als bewegungsführende Verbindung zwischen Tragstruktur **3** und Sitzteil **4** Lagerschalenpaarungen aus ungleichmäßig gewölbten Flächen **LSU** mit Kugeln. Man erkennt gegenüber Fig. 6, daß sowohl durch stärkere Generalneigung als auch durch z.B. elliptischen Wölbungsverlauf eine Erhöhung der Kippkomponente mit zunehmender Translation erreicht wurde.

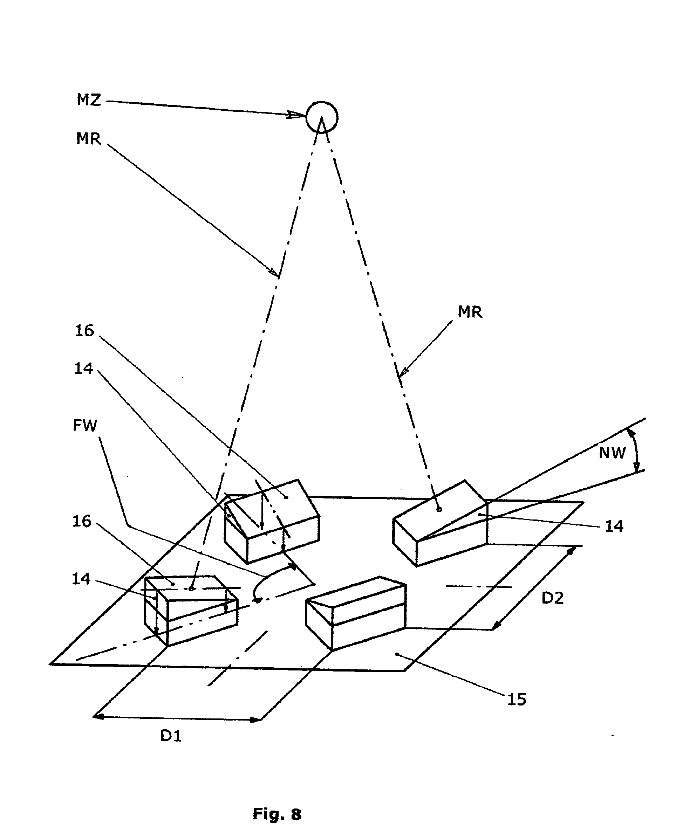

***Fig. 8*** zeigt schematisch vier Lagerschalenelemente **14** in der prinzipiellen Anordnung, mit der die Pendelkinematik erzeugt wird, mit ihrem Momentanzentrum **MZ** und ihren Momentanradien **MR.** Sie sind nach /G.2.f)/ verstellbar, so daß man zur Beeinflussung der Parameter folgende Maße ändern kann:
a) den Neigungswinkel **NW** der Lagerfläche **16**
b) die Positionen der Lagerflächen **16** gegeneinander in der ("horizontalen") Lagerflächenbasisebene **15,** angedeutet durch die Maße **D1** und **D2**
c) die Orientierung der "Fallinien" der Lagerflächen, d.h. die Orientierung der zur Lagerfläche tangentialen Ebene **16** bezogen auf die Lagerflächenbasisebene **15** und gegeneinander, angedeutet durch den Winkel **FW.**

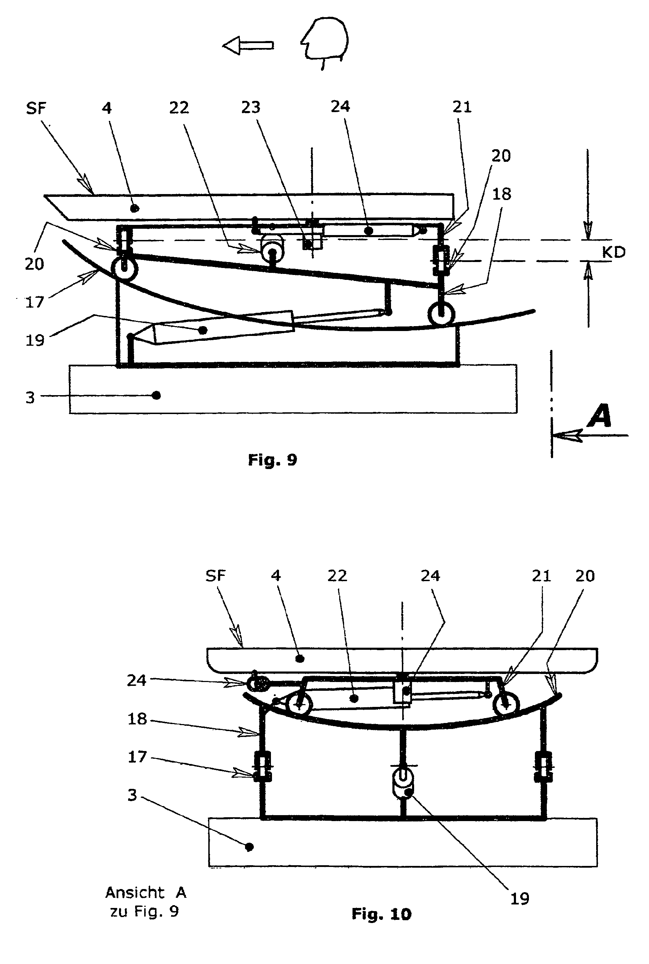

***Fig. 9*** zeigt in Seitenansicht eine erste vorteilhafte Ausführungsform des Hauptteils der Sitzvorrichtung mit zwei Bogenschlitten und Drehlager.
Auf den zur Tragstruktur **3** festen bogenförmigen Unterkufen **17** läuft der Unterschlitten **18,** angetrieben durch den Hubzylinder **19.** Er trägt über die bogenförmigen Oberkufen **20** den Oberschlitten **21,** der durch den Hubzylinder **22** angetrieben wird. Durch die beiden quer zueinander geführten Schlitten wird ein starr geformtes Pendelflächensphäroid des Sitzteils **4** erzeugt.
Durch unterschiedlichen Abstand der Oberkufen **20** vom und hinten von der Sitzfläche **SF,** repräsentiert durch das Maß **KD,** wird in diesem Beispiel die Translationskomponente des hinteren Sitzflächenrandes gegenüber der der Vorderkante verstärkt.
Zusätzliche Sitzflächenrotation wird in diesem Beispiel durch das Drehlager **23** und den Antriebszylinder **24** verwirklicht.

***Fig. 10*** zeigt die Vorrichtung nach Fig. 9 in der Rückansicht.

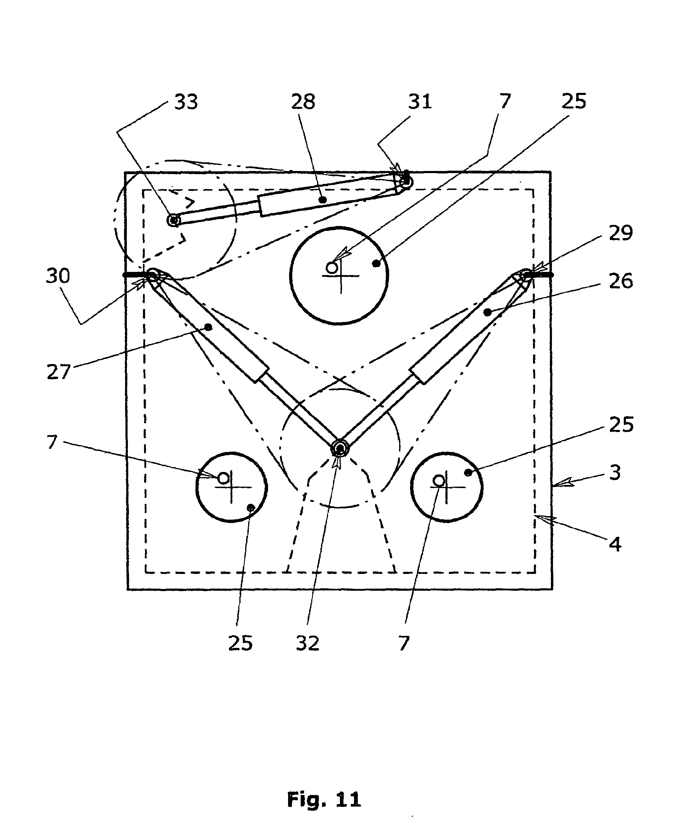

***Fig. 11*** zeigt in der Aufsicht eine zweite vorteilhafte praktische Ausführungsform des Hauptteils der Sitzvorrichtung, mit drei Lagerschalen und drei Antriebselementen.
1. Das Sitzteil **4** wird getragen von drei Lagerschalenpaarungen nach /G.2.b)/ **25** mit Kugel **7.** Sie sind in der Zeichenebene als Projektion sichtbar, jedoch räumlich orientiert nach dem Beispiel der Fig. 8. Diese Lagerung bewirkt somit die erfindungsgemäße Pendelkinematik des Sitzteils **4.**
2. Drei Linearschubelemente **26, 27, 28** stützen sich an drei Punkten **29, 30, 31** an der Tragstruktur 3 ab. Am Sitzteil **4** sind sie an 2 Punkten **32, 33** über geeignete Mitnehmerzapfen kugelig angelenkt und bewirken die Bewegungsabläufe in Zwangsführung.
3. Als Linearschubelemente sind verwendet entweder elektromotorischer Spindeltrieb ("elektromechanischer Hubzylinder") oder Hydraulikzylinder.

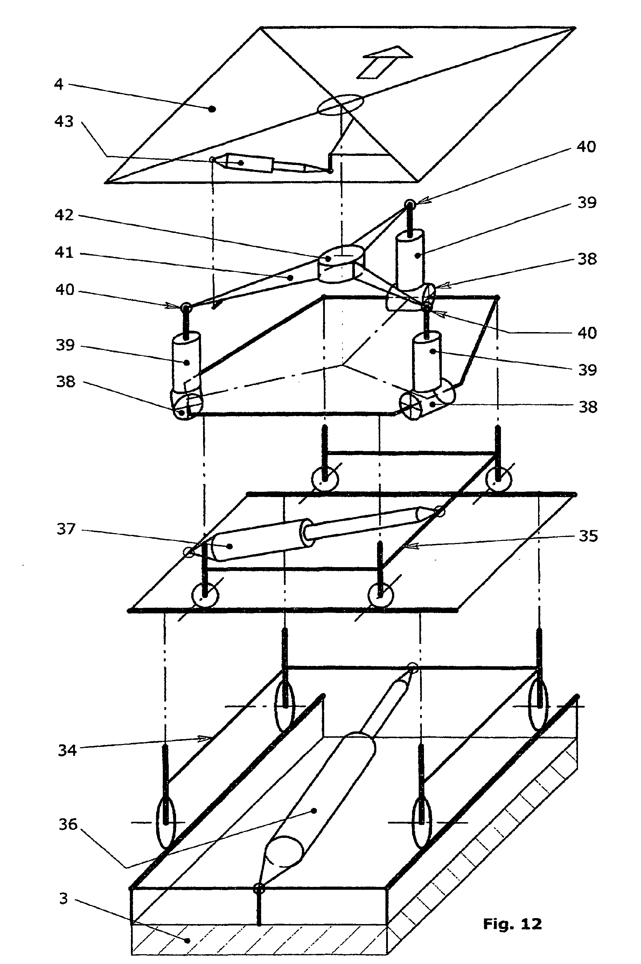

***Fig. 12*** zeigt eine dritte besonders vorteilhafte praktische Ausführungsform der Sitzvorrichtung in Bezug auf die Bewegungslagerung des Sitzteils. Dazu ist folgendes zu erläutern:
1. Auf der Tragstruktur **3** sind zwei gekreuzte Schlitten **34, 35** mit je einem Linearantrieb **36, 37** aufgebaut, die in der Horizontalebene alle Translationen gewährleisten.
2. Auf dem oberen Schlitten **35** sind am Umfang eines gedachten liegenden Kreises gleichmäßig die Fußlager **38** von drei Hubzylindern **39** verteilt. Das Fußlager erlaubt jedem Hubzylinder die Schwenkung um eine zum Basiskreis tangentiale Achse, die Hubzylinder einschl. Fußlager sind so ausgelegt, daß sie Radialkräfte ihrer Kolben aufnehmen können.
3. Die Kolbenköpfe der Hubzylinder sind durch kugelige Lager **40** mit einem Sitzteilrahmen **41** verbunden, der damit um alle Achsen verkippt und gleichzeitig mit den erforderlichen Vertikalwegen versehen werden kann.
4. Auf dem besagten Sitzteilrahmen **41** ist über ein Drehlager **42** das Sitzteil **4** angebracht, welchem durch den Hubzylinder **43** die Sitzflächenrotation vermittelt wird.

Durch Koordinierung von ebenen Schlittenverschiebungen mit Kipp- und Hubwirkungen des Hubzylindersatzes und Rotation des Drehtellers können alle Bewegungskomponenten in beliebiger Kombination optimal an die Sitzfläche gebracht werden.

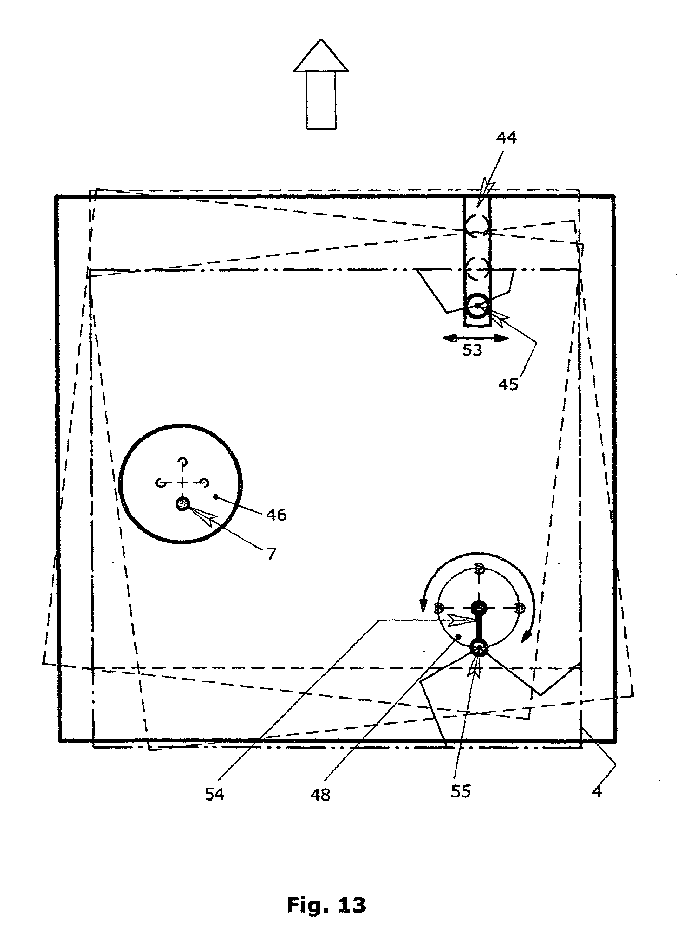

***Fig. 13*** zeigt eine vierte praktische Ausführungsform der Sitzvorrichtung, in Bezug auf die Bewegungslagerung des Sitzteils, die durch stark vereinfachte Bauweise allerdings nur einen Teil der Möglichkeiten ausschöpft. Dazu ist folgendes zu erläutern:
1. Das Sitzteil **4** ist vom abgestützt auf eine bogenförmige Führung nach /G.9./ **44,** hier in der Aufsicht in gerader Projektion sichtbar. In ihr läuft ein Stützzapfen **45,** der die Vorderkante des Sitzteils unterstützt.
2. Seitlich stützt eine Lagerschalen-Paarung **46** mit Kugel **7** nach /G.2.b)/.
3. Ein Scheibenaktor nach /G.8./ **48** bewirkt Stützung, Bewegungsführung und Antrieb mit der Möglichkeit wechselnder Rotationsrichtung.
4. Die vorgenannten Stützelemente, angebracht nach dem Prinzip der Fig. 8, bewirken immerhin eine kreisend-taumeinde Bewegung des Sitzteils mit erzwungener wechselrotatorischer Komponente, in einer Näherungsform der sphäroiden Bewegungsbahnen.

Wenn die Führung **44** quer zu ihrer Führungsrichtung nach beiden Seiten parallelverschieblich und querangetrieben gestaltet wird, wie durch Bewegungspfeil **53** angedeutet, können die rotatorischen Komponenten der Sitzfläche verstärkt oder unterbunden werden. Die Bewegungsausschläge könnten durch Ändern des Kurbelarms **54** beim Antriebselement **48** und des ihm zugeordneten Stützzapfens **55** des Sitzteils **4** verstellt werden.

Eine Vielzahl anderer Ausführungsformen ist denkbar, um die erfindungsgemäße räumliche Pendelkinematik vollständig oder teilweise zu verwirklichen.

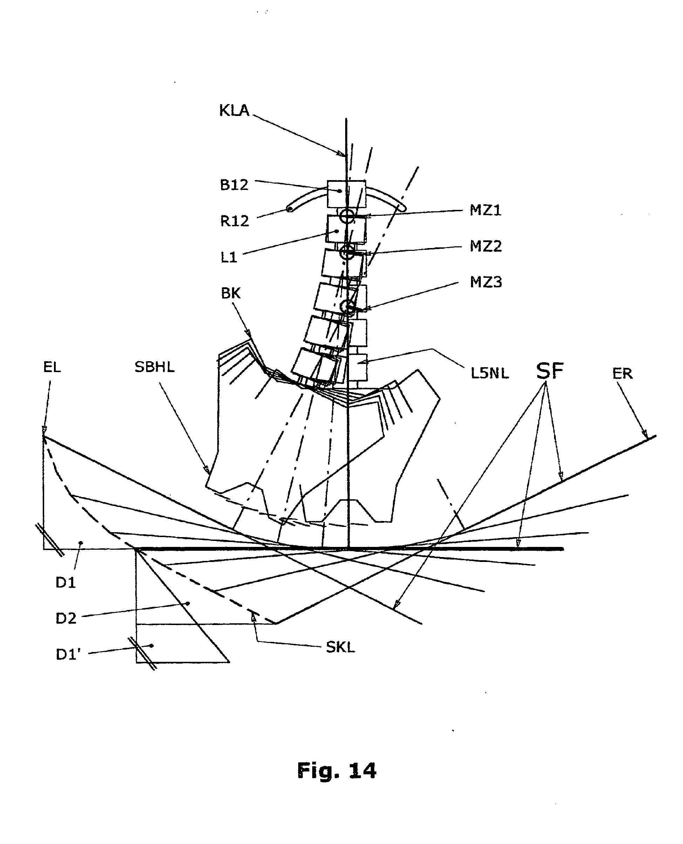

***Fig. 14*** zeigt eine Prinzipansicht von hinten mit schematisierten natürlichen Bewegungsverhältnissen von Lendenwirbelsäule (Wirbel **L1** bis **L5NL)** und Becken (wovon Beckenkamm **BK** und linker Sitzbeinhöcker SBHL bezeichnet sind).

Bei seitlicher Beugung mit in der Körperlängsachse **KLA** festgehaltenem letztem Brustwirbel **B12** und letzter Rippe **R12** kann die untere Wirbelsäule und damit die Sitzfläche SF den Bewegungsbereich von rechter Extremlage **ER** bis linker Extremlage **EL** befahren. Man erkennt die Wanderung des Momentanzentrums für verschiedene Stellungen (**MZ1, MZ2, MZ3**) und die ungleichförmige Bewegungsbahn der linken Sitzflächenkante SKL, ablesbar an den Dreiecken **D1** und **D2** (zur Verdeutlichung ist das kongruente **D1'** dem **D2** an die Seite gestellt).

## Patentansprüche

1. Sitzvorrichtung für eine menschliche Person mit
- einer tragenden Stützeinrichtung (1) und
- einer damit dagegen beweglich verbundenen und auf die Aufnahme eines menschlichen Gesäßes eingerichteten Sitzunterlage (2),
bei der die Sitzunterlage (2) aus einer mit der Stützeinrichtung (1) verbundenen Tragkonstruktion (3) und einem darauf unter Wahrung von wenigstens zwei Freiheitsgraden für eine gegenseitige Relativbewegung gelagerten Sitzteil (4) aufgebaut ist,
**dadurch gekennzeichnet, dass** das Sitzteil (4) auf der Tragkonstruktion (3) mit einer Lagerung abgestützt ist, mit der das Sitzteil (4) bei einer Relativbewegung zur Tragkonstruktion (3) die natürliche Bewegung nachvollzieht, welche das Becken einer Person ausführen würde, wenn sich deren Wirbelsäule bei fixiertem Schultergürtel der Person krümmt.

2. Sitzvorrichtung nach Anspruch 1,
**dadurch gekennzeichnet, dass** mit der Lagerung die Bewegung nachvollzogen ist, welche das Becken bei einer beugend-streckenden und/oder seitlich schwenkenden und/oder kreisenden Bewegung ausführen würde.

3. Sitzvorrichtung nach Anspruch 1 oder 2,
**dadurch gekennzeichnet, dass** die Lagerung mit sphäroiden Bewegungsbahnen gestaltet ist, entlang denen das Sitzteil (4) auf der Tragstruktur (3) tangentialverschiebbar ist.

4. Sitzvorrichtung nach Anspruch 1 oder 2,
**dadurch gekennzeichnet, dass** das Sitzteil (4) mit einer Lagerung auf der Tragkonstruktion (3) abgestützt ist, welche mit sphäroiden Bewegungsbahnen gestaltet ist, entlang denen das Sitzteil (4) auf der Tragstruktur (3) tangentialverschiebbar ist und die derart gekrümmt sind, dass das Momentanzentrum für die Tangentialverschiebbarkeit eine stetige Wanderung erfährt.

5. Sitzvorrichtung nach einem der Ansprüche 1 bis 4,
**dadurch gekennzeichnet, dass** die Lagerung mit einer Kombination von Hubelementen gestaltet ist, von denen das Sitzteil (4) auf der Tragstruktur (3) getragen ist.

6. Sitzvorrichtung nach Anspruch 5,
**dadurch gekennzeichnet, dass** die Drehkomponente der Relativbewegung zwischen Sitzteil (4) und Tragstruktur (3) durch ein drehfähiges oder drehelastisches Lagerelement (24, 42) zwischen dem Sitzteil (4) und anderen Teilen der Sitzunterlage (2) ermöglicht ist.

7. Sitzvorrichtung nach einem der Ansprüche 1 bis 6,
**dadurch gekennzeichnet, dass** ein externer Antrieb vorgesehen ist, mit dem der Sitzteil (4) relativ zur Tragstruktur (3) versetzbar ist, insbesondere in Pendelbewegung, vorzugsweise kombiniert mit einer leichten Wechseldrehung, deren Drehachse besonders bevorzugt etwa mit dem jeweiligen momentanen Pendelradius zusammenfällt.

8. Sitzvorrichtung nach Anspruch 7,
**dadurch gekennzeichnet, dass** eine Steuereinheit vorgesehen ist, mit der im Zusammenwirken mit dem Antrieb Bewegungssequenzen des Sitzteils (4) relativ zur Tragstruktur (3) aufgrund von Signalen aus externen Signalquellen ausgeführt werden können.

9. Sitzvorrichtung nach Anspruch 8,
**dadurch gekennzeichnet, dass** die Steuereinheit die Bewegungssequenzen aufgrund von Signalen aus Ton- oder Büd-Wiedergabegeräten, aus einer fahrzeugeigenen Sensorik eines zugehörigen Fahrzeugs und/oder aus eines externen Fahrzeuginformations- und Leitsystems ausführen kann.

10. Sitzvorrichtung nach Anspruch 8 oder 9,
**dadurch gekennzeichnet, dass** die Steuereinrichtung die Bewegungssequenzen aufgrund von Signalen ausführen kann, welche die individuellen anatomischen und/oder funktionell gegebenen biomechanischen Verhältnisse des Benutzers der Sitzvorrichtung wiedergeben.

11. Verfahren zum Ermitteln individueller Sitzbewegungs- und Einstellvorgaben zur Benutzung mit einer Sitzvorrichtung insbesondere nach einem der Ansprüche 1 bis 10,
mit den Schritten:
Fixieren eines vorgesehenen Benutzers der Sitzvorrichtung an seinem Schultergürtel, derart, dass sein Körpergewicht hauptsächlich auf den Achseln hängt und er das Becken mit sitzähnlich angezogenen Oberschenkeln kreisen lässt;
Registrieren der spontanen natürlichen Beckenbewegungen, die der Benutzer mit seinem Gesäß und einer daran zweckentsprechend befestigten Versuchs-Sitzfläche frei ausführt,
Herstellen von gespeicherten Datensequenzen, anhand der registrierten Beckenbewegungen und
Benutzen der gespeicherten Datensequenzen in einer Steuereinheit der Sitzvorrichtung für das Ermitteln individueller Sitzbewegungs- und Einstellvorgaben.

## Claims

1. Seating device for a human person with
- a load-carrying support device (1) and
- a seat base (2) which is connected to the latter so as to move relative thereto and is adapted to accommodate a human posterior,
in which the seat base (2) is constructed from a carrying structure (3), which is connected to the support device (1), and a seat part (4) which is mounted on the carrying structure while maintaining at least two degrees of freedom for a mutual relative movement,
**characterised in that** the seat part (4) is supported on the carrying structure (3) by means of a mounting by means of which, upon the execution of a movement relative to the carrying structure (3), the seat part (4) reconstructs the natural movement which the pelvis of a person would execute if the spine of the latter curves while the shoulder girdle of the person is restrained.

2. Seating device according to Claim 1,
**characterised in that** the movement which the pelvis would execute in the event of a bending-stretching and/or laterally pivoting and/or rotating movement is reconstructed by means of the mounting.

3. Seating device according to Claim 1 or 2,
**characterised in that** the mounting is formed with spheroidal paths of movement along which the seat part (4) can be displaced tangentially on the carrying structure (3).

4. Seating device according to Claim 1 or 2,
**characterised in that** the seat part (4) is supported on the carrying structure (3) by means of a mounting which is formed with spheroidal paths of movement along which the seat part (4) can be displaced tangentially on the carrying structure (3) and which are curved such that the instantaneous centre of rotation for the tangential displaceability constantly shifts.

5. Seating device according to any one of Claims 1 to 4,
**characterised in that** the mounting is formed with a combination of lifting elements by which the seat part (4) is carried on the carrying structure (3).

6. Seating device according to Claim 5,
**characterised in that** the rotational component of the relative movement between the seat part (4) and the carrying structure (3) is made possible by a rotatable or torsionally elastic bearing element (24, 42) between the seat part (4) and other parts of the seat base (2).

7. Seating device according to any one of Claims 1 to 6,
**characterised in that** an external drive is provided, by means of which drive the seat part (4) can be displaced relative to the carrying structure (3), in particular in a pendulum movement, preferably combined with a slight alternating rotation, the axis of rotation of which in particular preferably coincides with the respective instantaneous pendulum radius.

8. Seating device according to Claim 7,
**characterised in that** a control unit is provided, by means of which unit, in co-operation with the drive, sequences of movements of the seat part (4) relative to the carrying structure (3) can be executed on the basis of signals from external signal sources.

9. Seating device according to Claim 8,
**characterised in that** the control unit can execute the sequences of movements on the basis of signals from sound or image reproduction devices, from a sensor system belonging to an associated vehicle and/or from an external vehicle information and control system.

10. Seating device according to Claim 8 or 9,
**characterised in that** the control device can execute the sequences of movements on the basis of signals which reproduce the individual anatomical and/or functionally determined biomechanical conditions of the user of the seating device.

11. Method for establishing individual predetermined sitting movements and settings for use with a seating device, in particular according to any one of Claims 1 to 10,
comprising the following steps:
restraining an intended user of the seating device at his shoulder girdle such that his body weight primarily hangs from the shoulders and he lets the pelvis rotate with thighs drawn up as though seated;
recording the spontaneous natural pelvic movements which the user freely executes with his posterior and a test seat surface appropriately fastened thereto;
producing stored data sequences on the basis of the recorded pelvic movements and
using the stored data sequences in a control unit of the seating device for establishing individual predetermined sitting movements and settings.

## Revendications

1. Dispositif de siège pour personne doté
- d'un système d'appui (1) porteur et
- d'une base de siège (2) reliée à celui-ci et contre celui-ci de façon mobile et destinée à recevoir le postérieur d'une personne,
dans lequel la base de siège (2) peut être constituée d'une construction porteuse (3) reliée au système d'appui (1) et d'une partie de siège (4) montée dessus en conservant au moins deux degrés de liberté pour un déplacement relatif mutuel,
**caractérisé en ce que** la partie de siège (4) s'appuie sur la construction porteuse (3) avec un montage par lequel la partie de siège (4), à l'occasion d'un déplacement relatif par rapport à la construction porteuse (3), reproduit le mouvement naturel que le bassin d'une personne réaliserait lorsque sa colonne vertébrale se courbe quand sa ceinture est fixée.

2. Dispositif de siège selon la revendication 1,
**caractérisé en ce que** le montage permet de reproduire le mouvement que le bassin réaliserait à l'occasion d'un mouvement d'extension en se penchant et/ou d'un mouvement latéral pivotant et/ou rotatif.

3. Dispositif de siège selon la revendication 1 ou 2,
**caractérisé en ce que** le logement est conçu avec des trajectoires de déplacement sphéroïdes, le long desquelles la partie de siège (4) est mobile de façon tangentielle sur la structure porteuse (3).

4. Dispositif de siège selon la revendication 1 ou 2,
**caractérisé en ce que** la partie de siège (4) dotée d'un logement s'appuie sur la construction porteuse (3), laquelle est conçue avec des trajectoires de déplacement sphéroïdes, le long desquelles la partie de siège (4) est mobile de façon tangentielle sur la structure porteuse (3) et qui sont incurvées de telle sorte que le centre instantané de la mobilité tangentielle expérimente une migration continue.

5. Dispositif de siège selon l'une quelconque des revendications 1 à 4,
**caractérisé en ce que** le logement est conçu avec une combinaison d'éléments de levage par lesquels la partie de siège (4) est portée sur la structure porteuse (3).

6. Dispositif de siège selon la revendication 5,
**caractérisé en ce que** la composante de rotation du déplacement relatif entre la partie de siège (4) et la structure porteuse (3) est autorisée par un élément de palier (24, 42) rotatif ou à élasticité rotative entre la partie de siège (4) et d'autres parties de la base de siège (2).

7. Dispositif de siège selon l'une quelconque des revendications 1 à 6,
**caractérisé en ce qu'**un entraînement externe est prévu, avec lequel la partie de siège (4) peut être décalée par rapport à la structure porteuse (3), en particulier au cours d'un déplacement pendulaire, combiné de préférence à une légère rotation alternée, dont l'axe de rotation coïncide à peu près d'une façon particulièrement préférée avec le rayon pendulaire instantané respectif.

8. Dispositif de siège selon la revendication 7,
**caractérisé en ce qu'**il est prévu une unité de commande, avec laquelle, en coopération avec l'entraînement, les séquences de déplacement de la partie de siège (4) par rapport à la structure porteuse (3) peuvent être réalisées en raison des signaux provenant des sources de signaux externes.

9. Dispositif de siège selon la revendication 8,
**caractérisé en ce que** l'unité de commande peut réaliser les séquences de déplacement en raison des signaux provenant des appareils de reproduction du son ou de l'image, provenant d'une analyse sensorielle propre au véhicule d'un véhicule associé et/ou provenant d'un système externe d'information et de guidage du véhicule.

10. Dispositif de siège selon la revendication 8 ou 9,
**caractérisé en ce que** le système de commande peut réaliser les séquences de déplacement en raison des signaux, lesquels reproduisent les positions anatomiques individuelles et/ou biomécaniques, indiquées de façon fonctionnelle, de l'utilisateur du dispositif de siège.

11. Procédé destiné à déterminer les références individuelles de déplacement et de réglage du siège à utiliser avec un dispositif de siège, en particulier selon l'une quelconque des revendications 1 à 10, comprenant les étapes :
de fixation d'un utilisateur prévu du dispositif de siège à sa ceinture, de telle sorte que le poids de son corps est accroché principalement aux épaules et qu'il peut tourner le bassin en serrant les cuisses comme pour s'asseoir ;
d'enregistrement des mouvements naturels spontanés que l'utilisateur réalise avec son postérieur et d'une surface de siège d'essai fixée dessus d'une manière appropriée,
de fabrication de séquences de données mémorisées, en s'appuyant sur les mouvements enregistrés du bassin et
d'utilisation des séquences de données mémorisées dans une unité de commande du dispositif de siège pour déterminer les références individuelles de déplacement et de réglage du siège.
